# EUROPÄISCHE PATENTANMELDUNG

(11) **EP 4 843 812 A2**
(43) Veröffentlichungstag der Anmeldung: **25.11.2026**
(21) Anmeldenummer: 26203812.8
(22) Anmeldetag: 08.09.2026
(51) Int. Cl.: B60K 35/10

(54) **HALTEWUNSCHEINRICHTUNG FÜR EIN FAHRZEUG INSBESONDERE DES ÖFFENTLICHEN PERSONENVERKEHRS**

(71) Anmelder: EAO AG, 4600 Olten (CH)
(72) Erfinder: BURKARD, Dominique, 5070 Frick (CH); HOBLICH, Raik, 08134 Langenweissbach (DE)
(74) Vertreter: Piticco, Lorena

(57) **Zusammenfassung**

Haltewunscheinrichtung (1) für ein Fahrzeug insbesondere des öffentlichen Personenverkehrs umfassend mindestens ein Gehäuse (2), das zur Befestigung an und/oder in einem Fahrzeug ausgebildet ist, und mindestens eine Betätigungseinrichtung (3), welche dazu ausgebildet ist, bei Betätigung insbesondere durch einen Fahrgast ein Haltewunschsignal zu erzeugen. Die Haltewunscheinrichtung (1) weist weiter mindestens eine Schnittstelle (4) auf, wobei die Schnittstelle (4) mit einem externen elektrischen Verbraucher koppelbar und zur Übertragung elektrischer Energie an den externen elektrischen Verbraucher, insbesondere zum Aufladen des externen elektrischen Verbrauchers, ausgebildet ist.

## Beschreibung

### TECHNISCHES GEBIET

Die vorliegende Erfindung betrifft eine Haltewunscheinrichtung gemäss Anspruch 1, ein Fahrzeug umfassend eine derartige Haltewunscheinrichtung gemäss Anspruch 14, sowie ein Verfahren zur Herstellung einer derartigen Haltewunscheinrichtung gemäss Anspruch 15.

### STAND DER TECHNIK

Aus dem Stand der Technik sind Haltewunscheinrichtungen für Fahrzeuge des öffentlichen Personennahverkehrs bekannt, die in Fahrgasträumen von Bussen, Strassenbahnen oder ähnlichen Transportmitteln angeordnet sind und es Fahrgästen ermöglichen, einen Haltewunsch zu signalisieren. Solche Haltewunscheinrichtungen sind üblicherweise als mechanische oder kapazitive Drucktasten ausgeführt und werden an Haltestangen oder Fahrzeugwänden montiert.

Beispielsweise beschreibt die EP 2 416 335 A1 eine Haltewunscheinrichtung zur Befestigung an Haltestangen, bei der ein Gehäuse einen Stützstab umgreift und eine Betätigungseinheit aufnimmt. Der Fokus liegt hierbei auf der mechanischen Ausgestaltung des Gehäuses sowie auf einer platzsparenden und robusten Befestigung an der Haltestange. Eine Zusatzfunktion über die Haltewunschsignalisierung hinaus ist nicht vorgesehen.

Ältere Lösungen, wie sie etwa aus EP 0 412 418 B1 bekannt sind, befassen sich ebenfalls mit Haltewunscheinrichtungen zur Montage an Haltestangen. Dort stehen insbesondere der mechanische Aufbau, die kontaktierende elektrische Verbindung sowie eine vereinfachte Montage im Vordergrund. Auch hier beschränkt sich die Funktionalität auf die reine Haltewunschbetätigung.

Ähnliche Vorrichtungen sind aus der deutschen Offenlegungsschrift DE 10 2009 016 383 A1 bekannt, welche eine schraublose Befestigung einer Haltewunscheinrichtung an einer Haltestange beschreibt, um Montageaufwand und Beschädigungen der Haltestange zu vermeiden. Auch diese Lösung konzentriert sich ausschliesslich auf die Haltewunschfunktion.

Im öffentlichen Personennahverkehr besteht jedoch ein zunehmender Bedarf nach funktionalen und platzsparenden Bedienelementen, die sowohl den Komfort der Fahrgäste erhöhen als auch den technischen und wirtschaftlichen Anforderungen der Betreiber gerecht werden. Gleichzeitig ist die Nutzung externer elektrischer Verbraucher wie mobiler Endgeräte, z.B. Mobiltelefone oder Smartphones, für Fahrgäste während der Fahrt weit verbreitet, etwa für Kommunikation, Navigation, digitale Fahrausweise oder Reiseinformationen. Ein unzureichender Ladezustand solcher Geräte kann die Nutzbarkeit dieser Funktionen erheblich einschränken.

Bekannte Lösungen zur Stromversorgung mobiler Endgeräte in Fahrzeugen sehen üblicherweise separate USB-Ladebuchsen oder Steckdosen vor, die als eigenständige Komponenten installiert werden. Diese erfordern zusätzlichen Bauraum, erhöhen den Verkabelungs- und Wartungsaufwand und sind teilweise anfällig für Beschädigung, Vandalismus oder unsachgemäße Nutzung. Zudem sind sie oft nicht gleichmässig im Fahrzeug verteilt oder für stehende Fahrgäste nur eingeschränkt erreichbar.

Haltewunscheinrichtungen hingegen sind in Fahrgasträumen obligatorische, robust ausgeführte Bedienelemente, die ergonomisch günstig positioniert und auf häufige Betätigung ausgelegt sind. Sie verfügen in der Regel über eine elektrische Versorgung und sind in das Bordnetz des Fahrzeugs integriert. Wie eingangs erwähnt, wird diese vorhandene Infrastruktur bislang ausschliesslich für die Signalisierung eines Haltewunsches genutzt.

### DARSTELLUNG DER ERFINDUNG

Es ist eine Aufgabe der vorliegenden Erfindung, eine verbesserte Möglichkeit zur elektrischen Versorgung eines externen elektrischen Verbrauchers in einem Fahrzeug bereitzustellen, welche hinsichtlich Integration und Nutzung verbessert ist.

Diese Aufgabe wird durch eine Haltewunscheinrichtung gemäss Anspruch 1 gelöst. Es wird also eine Haltewunscheinrichtung für ein Fahrzeug insbesondere des öffentlichen Personenverkehrs angegeben, wobei die Haltewunscheinrichtung mindestens ein Gehäuse und mindestens eine Betätigungseinrichtung umfasst. Das Gehäuse ist zur Befestigung an und/oder in einem Fahrzeug ausgebildet. Die Betätigungseinrichtung ist dazu ausgebildet, bei Betätigung insbesondere durch einen Fahrgast ein Haltewunschsignal zu erzeugen. Die Haltewunscheinrichtung weist weiter mindestens eine Schnittstelle auf. Die Schnittstelle ist mit einem externen elektrischen Verbraucher koppelbar und zur Übertragung elektrischer Energie an den externen elektrischen Verbraucher, insbesondere zum Aufladen des externen elektrischen Verbrauchers, ausgebildet.

Das heisst, die vorliegende Erfindung basiert auf der Erkenntnis, eine Haltewunscheinrichtung mit einer zusätzlichen Nutzungsmöglichkeit für Fahrgäste zu kombinieren, wobei weder ein Bauraum noch eine Systemkomplexität wesentlich erhöht werden. Insbesondere gestattet die Haltewunscheinrichtung eine einfache und standardisierte Möglichkeit zum Aufladen externer elektrischer Verbraucher, wobei der Energieverbrauch begrenzt und kontrollierbar bleibt. Gleichzeitig bleiben Robustheit, Betriebssicherheit und Eignung für den Einsatz im öffentlichen Verkehr gewährleistet.

Durch die funktionale Kombination einer Haltewunscheinrichtung mit einer Schnittstelle zur Übertragung elektrischer Energie wird somit eine Mehrfachnutzung eines ohnehin notwendigen Fahrzeugbauteils erreicht. Dies führt zu einem verbesserten Fahrgasterlebnis, einer effizienteren Nutzung des vorhandenen Fahrzeugraums sowie zu einer Verringerung der Anzahl separat zu installierender Komponenten. Darüber hinaus kann eine solche Lösung zur Modernisierung und Attraktivitätssteigerung des öffentlichen Personennahverkehrs beitragen und zukünftige Erweiterungen im Bereich digitaler Fahrgastservices unterstützen.

Es gilt zu verstehen, dass die Haltewunscheinrichtung genau eine Schnittstelle oder zwei oder mehr Schnittstellen aufweisen kann. Analog kann nur eine Betätigungseinrichtung oder zwei oder mehr Betätigungseinrichtungen vorgesehen sein. Aussagen betreffend eine Schnittstelle bzw. Betätigungseinrichtung treffen vorzugsweise analog auf zwei oder mehr Schnittstellen bzw. Betätigungseinrichtungen zu, und umgekehrt.

Beim externen elektrischen Verbraucher handelt es sich beispielsweise um ein wiederaufladbares oder unmittelbar mit elektrischer Energie betriebenes elektrisches Gerät, beispielsweise ein mobiles Endgerät wie ein Mobiltelefon, Smartphone, oder Tablet, oder um ein elektrisches Zusatzgerät wie ein Kopfhörer-Ladecase, eine Powerbank, oder ein USB-Ventilator, etc.

Vorzugsweise umfasst die Schnittstelle eine kontaktgebundene Energieübertragungsschnittstelle, die vorzugsweise als Steckverbindung, insbesondere als USB-Schnittstelle wie eine USB-C-Schnittstelle, ausgebildet ist.

Bei der Schnittstelle handelt es sich somit vorzugsweise um eine kontaktgebundene Energieübertragungsschnittstelle, die zur Übertragung elektrischer Energie an den externen elektrischen Verbraucher ausgebildet ist.

Unter einer Kopplung der Schnittstelle mit dem externen elektrischen Verbraucher ist insbesondere die Herstellung einer zur Übertragung elektrischer Energie geeigneten Wirkverbindung zwischen der Schnittstelle und dem externen elektrischen Verbraucher zu verstehen.

Bei einer kontaktgebundenen Energieübertragungsschnittstelle erfolgt die Kopplung durch eine elektrisch leitfähige Verbindung zwischen der Schnittstelle und dem externen elektrischen Verbraucher oder einem mit dem externen elektrischen Verbraucher verbundenen Gegenstück.

Die kontaktgebundene Energieübertragungsschnittstelle kann insbesondere als Steckverbindung, beispielsweise als USB-Schnittstelle, vorzugsweise als USB-C-Schnittstelle, ausgebildet sein. Die Kopplung erfolgt dabei über einen unmittelbaren elektrischen Kontakt zwischen mindestens einem elektrischen Kontaktelement der Schnittstelle und mindestens einem korrespondierenden elektrischen Kontaktelement des externen elektrischen Verbrauchers oder des Gegenstücks.

Zusätzlich oder alternativ können bei einer Vorrichtung mit mehreren Schnittstellen die einzelnen Schnittstellen gleichartig oder unterschiedlich ausgebildet sein. Beispielsweise kann eine erste Schnittstelle als USB-C-Schnittstelle und eine zweite Schnittstelle als USB-A-Schnittstelleausgebildet sein.

Vorzugsweise ist die Schnittstelle und die Betätigungseinrichtung mit mindestens einer elektrischen Energieversorgungseinrichtung des Fahrzeugs, insbesondere einer Stromversorgung des Fahrzeugs, elektrisch verbindbar. Vorzugsweise ist die elektrische Energieversorgungseinrichtung dazu ausgebildet, die über die Schnittstelle zu übertragende elektrische Energie bereitzustellen sowie das Haltewunschsignal der Betätigungseinrichtung bei Betätigung zu erzeugen.

Die elektrische Energieversorgungseinrichtung kann Bestandteil eines fahrzeugseitigen Bordnetzes sein und insbesondere eine Gleichspannungsversorgung bereitstellen.

Insbesondere werden sowohl die Schnittstelle als auch die Betätigungseinrichtung von derselben elektrischen Energieversorgungseinrichtung des Fahrzeugs mit elektrischer Energie versorgt.

Besonders bevorzugt erfolgt die elektrische Energieversorgung dabei auch über eine gemeinsame und insbesondere eine einzige elektrische Anschlusseinrichtung, siehe nachfolgend.

Vorzugsweise umfasst die Haltewunscheinrichtung weiter mindestens eine elektrische Anschlusseinrichtung, die dazu ausgebildet ist, die Haltewunscheinrichtung, insbesondere die Schnittstelle sowie die Betätigungseinrichtung, mit einer elektrischen Energieversorgungseinrichtung des Fahrzeugs elektrisch zu verbinden.

Die Haltewunscheinrichtung weist vorzugsweise mindestens eine, und insbesondere eine einzige, elektrische Anschlusseinrichtung auf, die dazu ausgebildet ist, die Haltewunscheinrichtung mit der Energieversorgungseinrichtung eines Fahrzeugs elektrisch zu verbinden. Über die elektrische Anschlusseinrichtung kann der Haltewunscheinrichtung elektrische Energie von der fahrzeugseitigen elektrischen Energieversorgungseinrichtung zugeführt werden.

Die elektrische Anschlusseinrichtung ist vorzugsweise dazu ausgebildet, zusätzlich zur Energieversorgung elektrische Signale zwischen der Haltewunscheinrichtung und wenigstens einer fahrzeugseitigen Steuereinrichtung zu übertragen. Bei den elektrischen Signalen handelt es sich vorzugsweise um die Haltewunschsignale, welche von der Betätigungseinrichtung bei Betätigung erzeugt werden.

Insbesondere werden sämtliche für den Betrieb der Haltewunscheinrichtung erforderlichen elektrischen Funktionen, insbesondere die Signalübertragung der Betätigungseinrichtung, die Stromversorgung der Schnittstelle wie der USB-Schnittstelle wie auch von weiteren elektrischen und/oder elektronischen Bauteilen wie LEDs (siehe weiter unten) über eine gemeinsame elektrische Anschlusseinrichtung bereitgestellt.

Die elektrische Anschlusseinrichtung kann eine oder mehrere elektrische Kontakte umfassen und beispielsweise als Steckverbindung, Anschlussleitung, Kabelbaumanschluss oder als eine andere geeignete elektrische Verbindungseinrichtung ausgebildet sein. Die elektrische Anschlusseinrichtung kann lösbar mit einer fahrzeugseitigen Gegenanschlusseinrichtung verbunden sein, sodass die Haltewunscheinrichtung auf einfache Weise montiert, demontiert oder ausgetauscht werden kann.

Vorzugsweise handelt es sich bei der elektrischen Anschlusseinrichtung um einen elektrischen Steckverbinder, der mit dem fahrzeugseitigen Bordnetz verbindbar ist. Der elektrische Steckverbinder ist vorzugsweise dazu ausgebildet, mit der fahrzeugseitigen Gegenanschlusseinrichtung, insbesondere einem Gegenstecker eines fahrzeugseitigen Bordnetzes, elektrisch verbunden zu werden.

Der elektrische Steckverbinder kann über ein Anschlusskabel mit der Haltewunscheinrichtung verbunden sein. Das Anschlusskabel kann Bestandteil der Haltewunscheinrichtung sein und insbesondere eine elektrische Verbindung zwischen dem Steckverbinder und einer innerhalb der Haltewunscheinrichtung angeordneten elektrischen Funktionseinheit herstellen. Die Länge des Anschlusskabels kann vorzugsweise so gewählt sein, dass eine einfache Montage der Haltewunscheinrichtung ermöglicht wird. Beispielsweise kann das Anschlusskabel eine Länge von etwa 10 cm aufweisen.

Die fahrzeugseitige Gegenanschlusseinrichtung kann über ein Fahrzeugkabel mit dem fahrzeugseitigen Bordnetz verbunden sein. Vor einer Montage der Haltewunscheinrichtung kann die Gegenanschlusseinrichtung beispielsweise zumindest abschnittsweise aus einer Öffnung einer Haltestange des Fahrzeugs herausragen für den Fall, dass die Haltewunscheinrichtung an einer Haltestange befestigt werden soll, bzw. zumindest abschnittsweise aus einer Fläche des Fahrzeugs wie aus der Innenwand des Fahrzeugs herausragen, für den Fall dass die Haltewunscheinrichtung an einer Fläche befestigt werden soll, sodass eine elektrische Verbindung mit dem Steckverbinder der Haltewunscheinrichtung hergestellt werden kann.

Nach dem Zusammenfügen des Steckverbinders mit der Gegenanschlusseinrichtung kann die elektrische Verbindung in das Innere der Haltestange bzw. der Fläche wie der Innenwand des Fahrzeugs eingebracht werden. Hierzu kann eine Öffnung der Haltestange bzw. eine Öffnung der Fläche derart dimensioniert sein, dass die miteinander verbundenen Steckverbinder durch die Öffnung in das Innere der Haltestange bzw. der Fläche eingeführt werden können.

Vorzugsweise sind die Schnittstelle und die Betätigungseinrichtung innerhalb des Gehäuses elektrisch miteinander verbunden und gemeinsam insbesondere über die elektrische Anschlusseinrichtung mit einer elektrischen Energieversorgungseinrichtung des Fahrzeugs elektrisch verbindbar. Vorzugsweise sind die Schnittstelle und die Betätigungseinrichtung jeweils auf einer Leiterplatte angeordnet, und wobei die Leiterplatten insbesondere über eine innerhalb des Gehäuses angeordnete elektrische Steckverbindung miteinander verbunden sind.

Die mindestens eine Schnittstelle und die Betätigungseinrichtung sind somit vorzugsweise innerhalb des Gehäuses elektrisch miteinander verbunden. Die elektrische Anschlusseinrichtung ist vorzugsweise für die Schnittstelle und die Betätigungseinrichtung gemeinsam vorgesehen. Über die gemeinsame elektrische Anschlusseinrichtung können beide Komponenten mit einer ausserhalb des Gehäuses angeordneten elektrischen Energieversorgungseinrichtung verbunden und mit elektrischer Energie versorgt werden. Bei der elektrischen Energieversorgungseinrichtung handelt es sich insbesondere um das fahrzeugseitige Bordnetz.

Die Schnittstelle und die Betätigungseinrichtung müssen dabei nicht unmittelbar parallel an die Anschlusseinrichtung angeschlossen sein. Beispielsweise kann eine der Komponenten unmittelbar mit der gemeinsamen Anschlusseinrichtung und die andere Komponente über die innerhalb des Gehäuses bestehende elektrische Verbindung mittelbar mit der gemeinsamen Anschlusseinrichtung verbunden sein.

In einer Ausführungsform ist die Schnittstelle auf einer ersten Leiterplatte und die Betätigungseinrichtung auf einer von der ersten Leiterplatte separaten zweiten Leiterplatte angeordnet. Die beiden Leiterplatten sind vorzugsweise innerhalb des Gehäuses elektrisch miteinander verbunden.

Weiter können die Leiterplatten jeweils mindestens ein elektrisches und/oder elektronisches Bauelement tragen. Das mindestens eine elektrische und/oder elektronische Bauelement kann beispielsweise eine Lichtquelle wie eine LED (siehe weiter unten), eine elektrische Schalteinheit beispielsweise zum Erzeugen des Haltewunschsignals, und/oder eine elektronische Schaltung umfassen. Die über die elektrische Anschlusseinrichtung zugeführte elektrische Energie kann über die Leiterplatte, beispielsweise über auf der Leiterplatte ausgebildete Leiterbahnen, an das wenigstens eine elektrische und/oder elektronische Bauelement verteilt werden.

Die elektrische Verbindung zwischen den Leiterplatten kann insbesondere durch eine innerhalb des Gehäuses angeordnete elektrische Steckverbindung hergestellt sein. Die Steckverbindung kann unmittelbar zwischen den Leiterplatten oder mittelbar, beispielsweise über elektrische Leiter, Kabel, flexible Leiterbahnen oder eine weitere Verbindungseinrichtung, ausgebildet sein.

Vorzugsweise handelt es sich bei der Betätigungseinrichtung um eine Drucktaste. Die Betätigungseinrichtung bzw. Drucktaste ist vorzugsweise gegenüber dem Gehäuse beweglich am Gehäuse gelagert.

Vorzugsweise sind im Gehäuse mindestens eine elektrisch leitfähige Kontaktzunge, beispielsweise zwei oder mehr elektrisch leitfähige Kontaktzungen vorgesehen. Die Kontaktzunge(n) ist (sind) elektrisch mit einer der Leiterplatten, hier der Betätigungseinrichtung zugeordneten Leiterplatte, verbunden. Insbesondere handelt es sich bei der Betätigungseinrichtung somit um eine Drucktaste, wobei beim Drücken der Taste die Kontaktzunge(n) einen Stromkreis schliessen, während sie beim Loslassen die Taste selbsttätig in die geöffnete Ausgangslage zurückgeführt werden. Bei zwei oder mehr Kontaktzungen sind diese in einem unbetätigten Zustand der Betätigungseinrichtung vorzugsweise voneinander beabstandet. Durch Betätigen, insbesondere Drücken, der Betätigungseinrichtung werden die Kontaktzungen zusammengeführt und miteinander in elektrischen Kontakt gebracht, wodurch ein elektrisches Signal, hier das Haltewunschsignal, erzeugt wird.

Zwischen der Betätigungseinrichtung und einer inneren Kontur des Gehäuses ist vorzugsweise mindestens ein Rückstellelement, beispielsweise zwei Rückstellelemente angeordnet. Die Rückstellelemente erzeugen bei einer Betätigung der Betätigungseinrichtung eine der Betätigungsrichtung entgegengerichtete Rückstellkraft und führen die Betätigungseinrichtung nach dem Loslassen durch den Benutzer in die unbetätigte Ausgangslage zurück.

Die Rückstellelemente können insbesondere als Spiralfedern, vorzugsweise als Druckfedern, ausgebildet sein. Die beiden Spiralfedern können voneinander beabstandet angeordnet sein und dadurch zusätzlich einer Verkippung oder Verkantung der Betätigungseinrichtung bei deren Betätigung entgegenwirken.

Alternativ zu einer Steckverbindung kann die elektrische Verbindung zwischen den Komponenten beziehungsweise den Leiterplatten beispielsweise als Kabelverbindung, Leitungsbahnverbindung, Flexleiterverbindung, Kontaktfederverbindung, Lötverbindung, Einpressverbindung oder sonstige elektrisch leitende Verbindung ausgebildet sein.

Durch die interne elektrische Verbindung und die gemeinsame elektrische Anschlusseinrichtung können die beiden Komponenten gemeinsam an die externe elektrische Energieversorgungseinrichtung angeschlossen werden. Dadurch kann insbesondere der Montageaufwand reduziert werden, da für die Energieversorgung beider Komponenten nicht jeweils eine gesonderte fahrzeugseitige Anschlusseinrichtung vorgesehen und angeschlossen werden muss. Durch diese Ausgestaltung wird eine vereinfachte Montage sowie ein standardisierter elektrischer Anschluss ermöglicht, während gleichzeitig der Verkabelungsaufwand im Fahrzeuginnenraum reduziert wird.

Vorzugsweise weist die Schnittstelle ein Kopplungselement auf, über welches eine Kopplung der Schnittstelle mit dem externen elektrischen Verbraucher zur Übertragung elektrischer Energie herstellbar ist. Vorzugsweise ist das Kopplungselement am Gehäuse angeordnet. Zusätzlich oder alternativ dazu ist die Betätigungseinrichtung vorzugsweise am Gehäuse und insbesondere an einer dem Kopplungselement abgewandten Seiten des Gehäuses angeordnet.

Das Kopplungselement ist vorzugsweise Bestandteil der Schnittstelle und kann insbesondere als USB-Anschluss, vorzugsweise als USB-C-Anschluss, ausgebildet sein.

Das Kopplungselement, beispielsweise der USB-Anschluss, ist vorzugsweise am Gehäuse angeordnet.

Für den Fall, dass zwei oder mehr Schnittstellen vorhanden sind, sind deren Kopplungselemente vorzugsweise nicht an derselben Seite des Gehäuses, sondern an einander abgewandten Seiten des Gehäuses angeordnet.

Die Betätigungseinrichtung ist vorzugsweise am Gehäuse angeordnet.

Besonders bevorzugt sind sowohl das Kopplungselement der Schnittstelle als auch die Betätigungseinrichtung am Gehäuse angeordnet, und dabei insbesondere nicht an einer selben Seite, sondern vorzugsweise an einander abgewandten Seiten des Gehäuses.

Vorzugsweise weist das Gehäuse eine Vorderseite, eine Rückseite, eine Oberseite, eine Unterseite und seitliche Seiten auf. Beispielsweise kann die Betätigungseinrichtung auf der Vorderseite und das eine bzw. die zwei Kopplungselemente auf einer bzw. beiden seitlichen Seiten angeordnet sein.

Die Integration der mindestens einen Schnittstelle wie z.B. einem oder mehreren USB-Anschlüsse erfolgt somit vorzugsweise innerhalb desselben Gehäuses wie die Betätigungseinrichtung, sodass eine funktionale Mehrfachnutzung eines gemeinsamen Bauteils erreicht wird.

Vorzugsweise weist das Gehäuse zumindest in einem Bereich der Schnittstelle, insbesondere des Kopplungselements, mindestens ein durscheinendes Gehäuse-Schnittstellen-Element auf. Vorzugsweise ist das durchscheinende Gehäuse-Schnittstellen-Element durch mindestens eine im Gehäuse angeordnete Gehäuse-Schnittstellen-Lichtquelle, insbesondere eine LED, hinterleuchtbar, um:
- eine Auffindbeleuchtung für die Schnittstelle, insbesondere für das Kopplungselement, zu erzeugen, und/oder
- zumindest bei einer Kopplung der Schnittstelle mit einem externen elektrischen Verbraucher als optische Kopplungsbestätigung aufzuleuchten, und/oder
- einen Fehlerzustand anzuzeigen.

Denkbare Fehlerzustände umfassen beispielsweise interne oder externe Störungen, eine fehlerhafte oder unsachgemässe Verwendung durch den Benutzer sowie eine Überschreitung der zulässigen Leistungsgrenze durch einen oder mehrere angeschlossene elektrische Verbraucher. Insbesondere könnte ein denkbarer Fehlerzustand einen internen Defekt, einen externen Kurzschluss, die Verwendung eines defekten Kabels durch einen Benutzer, eine Leistungsüberschreitung durch mindestens einen angeschlossenen elektrischen Verbraucher wie mindestens ein oder zwei Notebooks, etc. sein.

Beim durchscheinenden Gehäuse-Schnittstellen-Element kann es sich um einen integralen Bestandteil des Gehäuses handeln, also um einen durchscheinenden Gehäusebereich. Es ist jedoch genauso denkbar, dass das durchscheinende Gehäuse-Schnittstellen-Element ein separat vom Gehäuse bereitgestelltes Element ist und in eine Ausnehmung oder dergleichen im Gehäuse angeordnet wird.

Unter "durchscheinend" wird hierin vorzugsweise verstanden, dass Licht der Lichtquelle wie der LED zumindest teilweise durchtreten kann, vorzugsweise ohne dass eine klare Durchsicht ermöglicht wird. Oder anders gesagt handelt es sich vorzugsweise um einen Zustand zwischen transparent und undurchsichtig, bei dem Licht teilweise transmittiert wird, jedoch keine klare Sicht auf hinter dem Gehäuse-Schnittstellen-Element befindliche Objekte wie die Lichtquelle möglich ist.

In einem Bereich der Schnittstelle, insbesondere des Kopplungselements, bedeutet vorzugsweise, dass das Gehäuse-Schnittstellen-Element zumindest abschnittsweise benachbart zu, angrenzend an und/oder die Schnittstelle, insbesondere das Kopplungselement, zumindest teilweise umgebend angeordnet ist.

Wie nachfolgend noch erörtert wird, kann das Gehäuse-Schnittstellen-Element in Form von mindestens einer grafischen Darstellung und/oder mindestens eines alphanumerischen Zeichens vorliegen. Beispielsweise kann es sich bei der grafischen Darstellung um eine geometrische Form wie eine Linie, Rand, Kreis, Rahmen, etc. handeln, welche die Schnittstelle bzw. das Kopplungselement zumindest bereichsweise umgibt. Analoges gilt für ein alphanumerisches Zeichen, welches beispielsweise einen oder mehrere Buchstaben und/oder Ziffern umfassen kann, zum Beispiel für eine Kennzeichnung der Schnittstelle bzw. des Kopplungselements. Auch ein alphanumerisches Zeichen kann zumindest abschnittsweise benachbart zu, angrenzend an und/oder den die Schnittstelle bzw. das Kopplungselement zumindest abschnittsweise umgebend angeordnet sein.

Ein die Schnittstelle bzw. Kopplungselement zumindest teilweise umgebendes Gehäuse-Schnittstellen-Element kann auch als eine die Schnittstelle bzw. das Kopplungselement wie den USB-Anschluss zumindest abschnittsweise umgebende, durchscheinende Kontur verstanden werden.

Die Auffindbeleuchtung für die Schnittstelle, insbesondere für das Kopplungselement, gestattet eine leichte Lokalisierung der Schnittstelle bzw. des Kopplungselements auch bei schlechten Lichtverhältnissen.

Vorzugsweise weist das Gehäuse zumindest in einem Bereich der Betätigungseinrichtung mindestens ein durchscheinendendes Gehäuse-Betätigungseinrichtungs-Element auf. Vorzugsweise ist das durscheinende Gehäuse-Betätigungseinrichtungs-Element durch mindestens eine im Gehäuse angeordnete Gehäuse-Betätigungseinrichtungs-Lichtquelle, insbesondere eine LED, hinterleuchtbar, um:
- eine Auffindbeleuchtung für die Betätigungseinrichtung zu erzeugen, und/oder
- zumindest bei einer Betätigung der Betätigungseinrichtung als optische Haltewunschbestätigung aufzuleuchten.

Beim durchscheinenden Gehäuse-Betätigungseinrichtungs-Element kann es sich wiederum um einen integralen Bestandteil des Gehäuses handeln, also um einen durchscheinenden Gehäusebereich. Es ist jedoch genauso denkbar, dass das durchscheinende Gehäuse-Betätigungseinrichtungs-Element ein separat vom Gehäuse bereitgestelltes Element ist und in eine Ausnehmung oder dergleichen im Gehäuse angeordnet wird. Genauso denkbar ist, dass das durchscheinenden Gehäuse-Betätigungseinrichtungs-Element mit einer Betätigungsfläche (siehe nachfolgend) in Verbindung steht, beispielsweise darin integriert ist. Sofern die Betätigungsfläche bewegbar ist, insbesondere aufgrund einer beweglich am Gehäuse gelagerten Betätigungseinrichtung, ist in diesem Fall auch das durchscheinenden Gehäuse-Betätigungseinrichtungs-Element vorzugsweise bewegbar ausgebildet und wird bei einer Betätigung der Betätigungseinrichtung bzw. Betätigungsfläche mitbewegt.

Analog zum Gehäuse-Schnittstellen-Element ist das Gehäuse-Betätigungseinrichtungs-Element vorzugsweise in einem Bereich der Betätigungseinrichtung, insbesondere zumindest abschnittsweise benachbart zu, angrenzend an und/oder die Betätigungseinrichtung zumindest teilweise umgebend angeordnet.

Auch hat das Gehäuse-Betätigungseinrichtungs-Element vorzugsweise die Form von mindestens einer grafischen Darstellung und/oder mindestens eines alphanumerischen Zeichens.

Die Auffindbeleuchtung für die Betätigungseinrichtung gestattet eine leichte Lokalisierung der Betätigungseinrichtung auch bei schlechten Lichtverhältnissen.

Vorzugsweise weist die Betätigungseinrichtung eine Betätigungsfläche auf, welche zumindest abschnittsweise durchscheinend ausgebildet ist und durch mindestens eine im Gehäuse angeordnete Betätigungsflächen-Lichtquelle, insbesondere eine, hinterleuchtbar ist, um eine Auffindbeleuchtung für die Betätigungseinrichtung zu erzeugen.

Die Betätigungsfläche der Betätigungseinrichtung ist vorzugsweise mittig durchscheinend ausgebildet.

Die Beleuchtung der Betätigungsfläche bzw. deren Auffindbeleuchtung verbessert die Bedienbarkeit der Haltewunscheinrichtung insbesondere in dunkler Umgebung.

Vorzugsweise sind die Gehäuse-Schnittstellen-Lichtquelle und/oder die Gehäuse-Betätigungseinrichtungs-Lichtquelle und/oder die Betätigungsflächen-Lichtquelle durch eine gemeinsame Lichtquelle oder durch separate Lichtquellen bereitgestellt.

Zusätzlich oder alternativ dazu sind die Gehäuse-Schnittstellen-Lichtquelle und/oder die Gehäuse-Betätigungseinrichtungs-Lichtquelle und/oder die Betätigungsflächen-Lichtquelle vorzugsweise gleichartige Lichtquellen oder verschiedenartige Lichtquellen, insbesondere von unterschiedlicher Wellenlänge.

Zusätzlich oder alternativ dazu sind die Gehäuse-Schnittstellen-Lichtquelle und/oder die Gehäuse-Betätigungseinrichtungs-Lichtquelle und/oder die Betätigungsflächen-Lichtquelle vorzugsweise für eine dauerhafte Beleuchtung oder eine periodische Beleuchtung und/oder eine ereignisabhängige Beleuchtung wie eine Kopplung der Schnittstelle mit einem externen elektrischen Verbraucher und/oder einer Betätigung der Betätigungseinrichtung ausgebildet.

Zusätzlich oder alternativ dazu sind die Gehäuse-Schnittstellen-Lichtquelle und/oder die Gehäuse-Betätigungseinrichtungs-Lichtquelle und/oder die Betätigungsflächen-Lichtquelle vorzugsweise unabhängig voneinander oder in Kombination miteinander betreibbar.

Die Gehäuse-Schnittstellen-Lichtquelle und/oder die Gehäuse-Betätigungseinrichtungs-Lichtquelle und/oder die Betätigungsflächen-Lichtquelle können auf unterschiedliche Weise ausgebildet und betrieben werden.

Das heisst, in einer Ausführungsform werden die Gehäuse-Schnittstellen-Lichtquelle und/oder die Gehäuse-Betätigungseinrichtungs-Lichtquelle und/oder die Betätigungsflächen-Lichtquelle durch eine gemeinsame, also durch eine einzige Lichtquelle bereitgestellt. Es ist jedoch genauso denkbar, dass mindestens zwei dieser Lichtquellen bzw. alle dieser Lichtquellen, also die Gehäuse-Schnittstellen-Lichtquelle und die Gehäuse-Betätigungseinrichtungs-Lichtquelle und die Betätigungsflächen-Lichtquelle durch separate Lichtquellen bereitgestellt werden, so dass die einzelnen Bereiche unabhängig voneinander beleuchtet und angesteuert werden können. Im Falle von separaten Lichtquellen können die Gehäuse-Schnittstellen-Lichtquelle und/oder die Gehäuse-Betätigungseinrichtungs-Lichtquelle und/oder die Betätigungsflächen-Lichtquelle gleichartig oder verschiedenartig ausgebildet sein. Insbesondere können verschiedenartige Lichtquellen unterschiedlicher Wellenlängen vorgesehen sein, beispielsweise weisse, rote, grüne, oder blaue Lichtquellen. Weiter können mehrfarbige Lichtquellen, insbesondere RGB-, RGBW- oder vergleichbare Mehrkanal-Lichtquellen, eingesetzt werden, sodass unterschiedliche Farben oder Farbkombinationen erzeugbar sind.

Die Lichtquellen können für eine dauerhafte, kontinuierliche Beleuchtung oder für eine periodische Beleuchtung ausgebildet sein. Ebenso kann eine ereignisabhängige Beleuchtung vorgesehen sein. Ein derartiges Ereignis kann beispielsweise das Koppeln der Schnittstelle mit einem externen elektrischen Verbraucher und/oder das Betätigen der Betätigungseinrichtung wie das Berühren der Betätigungsfläche sein. Die Beleuchtung kann dabei automatisch aktiviert, deaktiviert oder hinsichtlich ihrer Eigenschaften verändert werden.

Die einzelnen Lichtquellen können unabhängig voneinander oder in beliebiger Kombination miteinander betrieben werden. Dadurch kann beispielsweise ausschliesslich die Schnittstelle, ausschliesslich die Betätigungseinrichtung oder ausschliesslich die Betätigungsfläche beleuchtet werden. Ebenso können zwei oder alle drei Beleuchtungsbereiche gleichzeitig oder zeitlich aufeinander abgestimmt aktiviert werden.

Die Lichtquellen können unterschiedliche Farben ausgeben, wobei die jeweilige Farbe insbesondere einem Betriebszustand, einer Funktion oder einer Benutzerinformation zugeordnet sein kann. Beispielsweise kann eine erste Farbe einen betriebsbereiten Zustand, eine zweite Farbe einen aktiven Kopplungsvorgang, eine dritte Farbe einen Fehlerzustand und eine weitere Farbe einen Wartungs- oder Servicezustand signalisieren.

Ebenso können Farbwechsel oder Farbverläufe vorgesehen sein.

Darüber hinaus können die Lichtquellen unterschiedliche Leuchtsequenzen erzeugen. Hierzu zählen insbesondere dauerhaftes Leuchten, periodisches Ein- und Ausschalten, Blinken mit konstanter oder variabler Frequenz, sequentielle Aktivierung mehrerer Lichtquellen, etc.

Die Leuchtsequenzen können in Abhängigkeit von einem Betriebszustand, einem Benutzerereignis, und/oder einer Betätigung der Betätigungseinrichtung bzw. Kopplung mit der Schnittstelle ausgewählt oder verändert werden.

Die Ansteuerung der Lichtquellen kann dabei derart erfolgen, dass Farben, Helligkeiten, Leuchtsequenzen und Aktivierungszeitpunkte für die einzelnen Lichtquellen unabhängig voneinander oder synchronisiert eingestellt werden können. Dadurch ist eine flexible optische Rückmeldung an einen Benutzer sowie eine an unterschiedliche Anwendungsfälle angepasste Signalisierung realisierbar.

Vorzugsweise ist das Gehäuse-Schnittstellen-Element und/oder das Gehäuse-Betätigungseinrichtungs-Element mindestens eine grafische Darstellung und/oder mindestens ein alphanumerisches Zeiche.

Wie früher bereits erwähnt, können das Gehäuse-Schnittstellen-Element und/oder das Gehäuse-Betätigungseinrichtungs-Element mindestens eine grafische Darstellung und/oder mindestens ein alphanumerisches Zeichen sein.

Zusätzlich oder alternativ dazu ist es denkbar, dass die durchscheinend ausgebildete Betätigungsfläche der Betätigungseinrichtung in Form von mindestens einer grafischen Darstellung und/oder mindestens eines alphanumerischen Zeichens vorliegt.

Vorzugsweise ist die Schnittstelle zumindest teilweise, insbesondere deren Kopplungselement, in einer Vertiefung des Gehäuses angeordnet. Vorzugsweise ist eine dem Gehäuseäusseren zugewandte Oberfläche der Schnittstelle gegenüber einer durch die an die Vertiefung angrenzenden Gehäuseoberflächen definierten Aussenkontur nach innen versetzt.

Zumindest ein Teil der Schnittstelle, insbesondere deren Kopplungselement, ist vorzugsweise gegenüber einer diesen Teil der Schnittstelle bzw. das Kopplungselement umgebende Aussenkontur des Gehäuses versenkt angeordnet. Anders gesagt ragt die Schnittstelle, insbesondere deren Kopplungselement, somit vorzugsweise nicht über diese Aussenkontur hinaus und kann dadurch gegenüber Stössen, Reibkontakten und anderen mechanischen Einwirkungen geschützt werden.

Vorzugsweise umfasst das Gehäuse mindestens eine Befestigungseinrichtung zur Befestigung der Haltewunscheinrichtung am und/oder im Fahrzeug, insbesondere an einer Haltestange oder an einer Fläche des Fahrzeugs. Zusätzlich oder alternativ dazu ist das Gehäuse vorzugsweise mehrteilig und weist insbesondere mindestens einen ersten Gehäuseteil und einen zweiten Gehäuseteil auf. Der erste Gehäuseteil ist vorzugsweise für unterschiedliche Befestigungsarten gleich und/oder der zweite Gehäuseteil ist vorzugsweise in Abhängigkeit von der Befestigungsart unterschiedlich ausgebildet.

Vorzugsweise umfasst die Haltewunscheinrichtung mindestens eine Befestigungseinrichtung, mittels welcher sie an und/oder in einem Fahrzeug befestigbar ist.

Die Befestigung kann insbesondere an einer Haltestange oder an einer Fläche des Fahrzeugs erfolgen, beispielsweise an einer Innenwand, einer Verkleidung, einem Sitz oder einer Sitzstruktur.

Die Befestigungseinrichtung kann zumindest teilweise durch das Gehäuse oder einen Gehäuseteil gebildet sein und/oder mindestens ein vom Gehäuse separates Befestigungs- oder Positionierelement umfassen. Die Befestigung kann insbesondere mittels einer Schraub-, Rast-, Klemm- und/oder formschlüssigen Verbindung erfolgen. Dabei kann die Haltewunscheinrichtung unmittelbar oder über mindestens ein separates Befestigungs- oder Positionierelement mittelbar am Fahrzeug befestigt sein.

Das Gehäuse ist vorzugsweise mehrteilig ausgebildet und umfasst einen ersten, insbesondere vorderen, Gehäuseteil sowie einen zweiten, insbesondere hinteren, Gehäuseteil. Der erste Gehäuseteil kann für unterschiedliche Befestigungsarten gleich ausgebildet sein, während der zweite Gehäuseteil an die jeweilige Befestigungsart angepasst ist. Unter den Befestigungsarten wird vorzugsweise eine Befestigung an einer Haltestange bzw. an einer Fläche des Fahrzeugs verstanden.

Für eine Befestigung an einer Haltestange weist das Gehäuse vorzugsweise eine Aufnahme- oder Durchgangsöffnung auf, durch welche die Haltestange zumindest abschnittsweise hindurchgeführt ist. Das Gehäuse kann die Haltestange dabei zumindest teilweise umschliessen. Für eine schrauben- und werkzeuglose Montage kann mindestens ein separates, insbesondere aus Kunststoff bestehendes Befestigungs- oder Positionierelement vorgesehen sein, welches die Haltestange zumindest abschnittsweise flächig umschliesst und in eine Öffnung der Haltestange eingreift, um ein Verschieben und/oder Verdrehen der Haltewunscheinrichtung gegenüber der Haltestange zu verhindern.

Für eine Befestigung an einer Fläche weist der zweite, insbesondere hintere, Gehäuseteil vorzugsweise einen Befestigungsbereich zur Anlage und Befestigung an der Fläche auf. Die Befestigung kann beispielsweise mittels Schrauben erfolgen. Der hintere Gehäuseteil kann in einem oberen und einem unteren Bereich jeweils einen insbesondere halbkreisförmigen Abschnitt aufweisen, durch welchen ein für die Haltestange vorgesehener Ausschnitt des ersten Gehäuseteils zumindest teilweise, insbesondere vollständig, verschlossen wird.

Unabhängig von der Befestigungsart ist die Betätigungseinrichtung vorzugsweise an einer einem Benutzer zugewandten Vorderseite des Gehäuses angeordnet.

Die mindestens eine Schnittstelle wie der USB-Anschluss bzw. zwei oder mehr Schnittstellen wie zwei oder mehr USB-Anschlüsse sind vorzugsweise derart am Gehäuse angeordnet, dass sie bei montierter Haltewunscheinrichtung an der Haltestange bzw. an der Fahrzeugfläche wie einer Innenwand nach hinten, unten oder seitlich abgewandt orientiert sind.

In einem weiteren Aspekt wird ein Fahrzeug, vorzugsweise des öffentlichen Personenverkehrs, angegeben, wobei das Fahrzeug mindestens eine Haltewunscheinrichtung wie oben beschrieben umfasst. Vorzugsweise ist die Haltewunscheinrichtung an einer Haltestange oder an einer Fläche des Fahrzeugs wie einer Innenwand befestigt.

Sämtliche Aussagen betreffend die Haltewunscheinrichtung gelten vorzugsweise analog für das Fahrzeug umfassend die Haltewunscheinrichtung und umgekehrt.

Beim Fahrzeug handelt es sich vorzugsweise um ein Fahrzeug des öffentlichen Personenverkehrs wie z.B. um ein Schienenfahrzeug oder einen Bus.

In einem weiteren Aspekt wird ein Verfahren zur Herstellung einer Haltewunscheinrichtung, insbesondere wie oben beschrieben, angegeben. Das Verfahren umfasst die Schritte von i) Bereitstellen von mindestens einem Gehäuse, das zur Befestigung an und/oder in einem Fahrzeug ausgebildet ist, und ii) Bereitstellen von mindestens einer Betätigungseinrichtung, welche dazu ausgebildet ist, bei Betätigung insbesondere durch einen Fahrgast ein Haltewunschsignal zu erzeugen. Weiter wird mindestens eine Schnittstelle bereitgestellt. Die Schnittstelle ist mit einem externen elektrischen Verbraucher koppelbar und zur Übertragung elektrischer Energie an den externen elektrischen Verbraucher, insbesondere zum Aufladen des externen elektrischen Verbrauchers, ausgebildet.

Aussagen betreffend die Haltewunscheinrichtung als solches gelten vorzugsweise analog für das Verfahren zur Herstellung der Haltewunscheinrichtung und umgekehrt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: zeigt eine perspektivische Ansicht einer Haltewunscheinrichtung, welche an einer Haltestange eines Fahrzeugs befestigt ist;
- Fig. 2: zeigt eine perspektivische Teilansicht der Haltewunscheinrichtung gemäss Figur 1;
- Fig. 3: zeigt eine perspektivische Ansicht einer weiteren Haltewunscheinrichtung, welche an einer Fläche wie einer Innenwand eines Fahrzeugs befestigt ist.

### BESCHREIBUNG BEVORZUGTER AUSFÜHRUNGSFORMEN

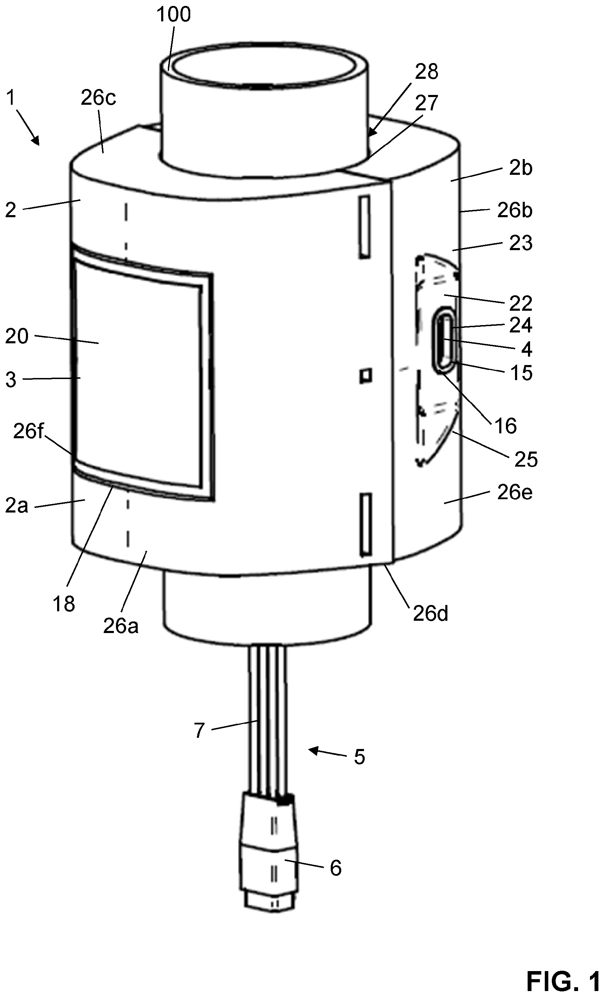

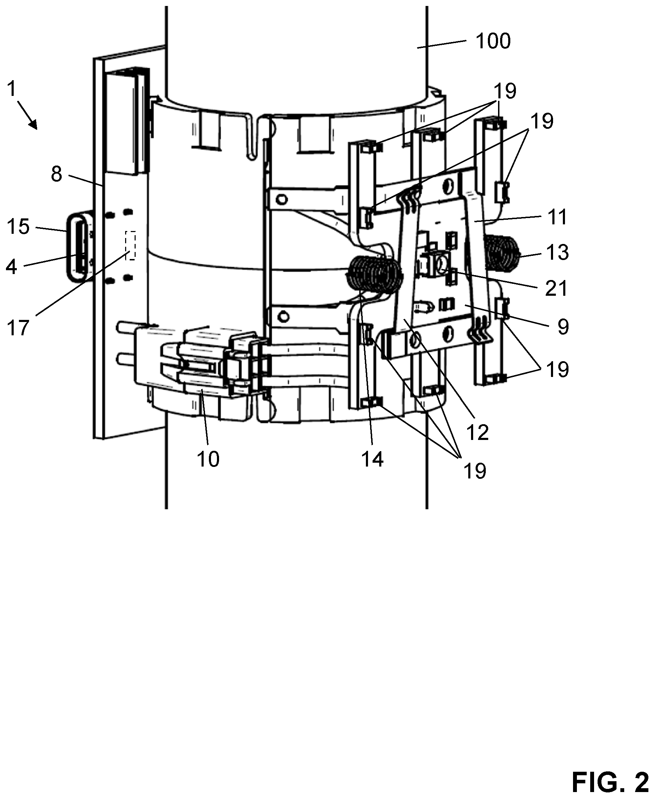

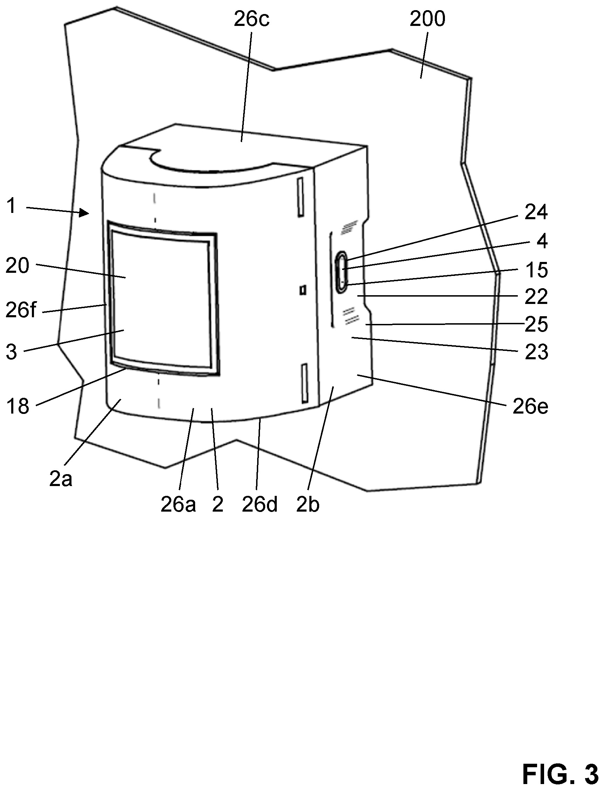

Die Figuren 1 bis 3 zeigen Haltewunscheinrichtungen für ein Fahrzeug des öffentlichen Personenverkehrs. Während die Haltewunscheinrichtungen der Figuren 1 und 2 an einer Haltestange des Fahrzeugs befestigt sind, ist die Haltewunscheinrichtung der Figur 3 an einer Fläche des Fahrzeugs, hier an einer Innenwand des Fahrzeugs befestigt.

Beide Haltewunscheinrichtungen haben jedoch gemeinsam, dass sie ein Gehäuse 2 zur Befestigung an und/oder in einem Fahrzeug aufweisen. Weiter ist eine Betätigungseinrichtung 3 vorhanden, welche dazu ausgebildet ist, bei Betätigung durch einen Fahrgast ein Haltewunschsignal zu erzeugen. Zudem weist die Haltewunscheinrichtung 1 eine Schnittstelle 4 auf, wobei die Schnittstelle 4 mit einem externen elektrischen Verbraucher koppelbar und zur Übertragung elektrischer Energie an den externen elektrischen Verbraucher, insbesondere zum Aufladen des externen elektrischen Verbrauchers, ausgebildet ist.

Bei der in den Figuren dargestellten Schnittstelle handelt es sich jeweils um eine kontaktgebundene Energieübertragungsschnittstelle, die als Steckverbindung, hier als USB-Schnittstelle in Form einer USB-C-Schnittstelle ausgebildet ist.

Die Schnittstelle 4 weist ein Kopplungselement 15 hier in Form eines USB-C-Anschlusses auf, über welchen eine Kopplung der Schnittstelle 4 mit dem externen elektrischen Verbraucher zur Übertragung elektrischer Energie herstellbar ist. Das Kopplungselement 15 bzw. der USB-C-Anschluss ist am Gehäuse 2 angeordnet, und zwar an einer der Betätigungseinrichtung 3 abgewandten Seite des Gehäuses 2.

So weist das Gehäuse eine Vorderseite 26a, eine Rückseite 26b, eine Oberseite 26c, eine Unterseite 26d und zwei seitliche Seiten 26e; 26f auf. Wie gut aus den Figuren 1 und 3 hervorgeht, ist die Betätigungseinrichtung hier jeweils auf der Vorderseite 26a und das Kopplungselement 15, hier also der USB-C-Anschluss, auf der daneben liegenden Seite 26e angeordnet.

Die Schnittstelle 4 und die Betätigungseinrichtung 3 sind mit mindestens einer elektrischen Energieversorgungseinrichtung des Fahrzeugs, insbesondere einer Stromversorgung des Fahrzeugs, elektrisch verbindbar. Die elektrische Energieversorgungseinrichtung ist dazu ausgebildet, die über die Schnittstelle 4 zu übertragende elektrische Energie bereitzustellen sowie die Erzeugung des Haltewunschsignals der Betätigungseinrichtung 3 bei Betätigung zu erzeugen.

Die elektrische Energieversorgungseinrichtung kann Bestandteil eines fahrzeugseitigen Bordnetzes sein und insbesondere eine Gleichspannungsversorgung bereitstellen. Sowohl die Schnittstelle 4 als auch die Betätigungseinrichtung 3 werden von derselben elektrischen Energieversorgungseinrichtung des Fahrzeugs mit elektrischer Energie versorgt.

Die elektrische Energieversorgung erfolgt dabei über eine gemeinsame sowie eine einzige elektrische Anschlusseinrichtung 5.

Wie aus Figur 1 hervorgeht, kann es sich bei der elektrischen Anschlusseinrichtung 5 um einen elektrischen Steckverbinder 6 handeln, der mit dem fahrzeugseitigen Bordnetz verbindbar ist. Der elektrische Steckverbinder 6 ist vorzugsweise dazu ausgebildet, mit der fahrzeugseitigen Gegenanschlusseinrichtung, insbesondere einem Gegenstecker eines fahrzeugseitigen Bordnetzes, elektrisch verbunden zu werden.

Der elektrische Steckverbinder 6 ist hier über ein Anschlusskabel 7 mit der Haltewunscheinrichtung 1 verbunden.

Bei der in den Figuren 1 und 2 gezeigten Ausführungsform hängen ein fahrzeugseitiges Kabel und Gegenstecker vor der Montage der Haltewunscheinrichtung 1 aus einem Loch der Haltestange 100 heraus. Das Loch in der Haltestange 100 ist so gross, dass die Steckverbindung nach Zusammenfügen von Steckverbinder 6 und dem Gegenstecker der fahrzeugseitigen Gegenanschlusseinrichtung durch das Loch in Haltestange 100 in deren Inneres geschoben werden kann. Bei der in der Figur 3 gezeigten Ausführungsform werden der Steckverbinder 6 und das Anschlusskabel 7 nach der Montage der Haltewunscheinrichtung 1 an der Fahrzeugfläche 200 von aussen nicht sichtbar nach hinten weggeführt und mit dem fahrzeugseitigen Bordnetz verbunden.

Wie aus Figur 2 hervorgeht, sind die Schnittstelle 4 und die Betätigungseinrichtung 3 innerhalb des Gehäuses 2 elektrisch miteinander verbunden und können gemeinsam über die elektrische Anschlusseinrichtung 5 mit einer elektrischen Energieversorgungseinrichtung des Fahrzeugs elektrisch verbunden werden. Insbesondere sind die Schnittstelle 4 und die Betätigungseinrichtung 3 hierzu jeweils auf einer Leiterplatte 8; 9 angeordnet, und die beiden Leiterplatten 8; 9 sind über eine innerhalb des Gehäuses 2 angeordnete elektrische Steckverbindung 10 miteinander verbunden.

Bei der Betätigungseinrichtung 3 handelt es sich in den gezeigten Beispielen um eine Drucktaste und die Betätigungseinrichtung bzw. Drucktaste 3 ist gegenüber dem Gehäuse 2 beweglich am Gehäuse 2 gelagert. Im Gehäuse 2 sind zwei elektrisch leitfähige Kontaktzungen 11; 12 vorgesehen. In einem unbetätigten Zustand der Betätigungseinrichtung 3 sind die Kontaktzungen 11; 12 voneinander beabstandet. Durch Betätigen, insbesondere Drücken, der Betätigungseinrichtung 3 werden die Kontaktzungen 11; 12 zusammengeführt und miteinander in elektrischen Kontakt gebracht, wodurch ein elektrisches Signal, hier das Haltewunschsignal, erzeugt wird. Die Kontaktzungen 11; 12 sind elektrisch mit der der Betätigungseinrichtung 3 zugeordneten Leiterplatte 9 verbunden. Bei Drücken der Betätigungseinrichtung 3 schliessen die Kontaktzungen 11; 12 einen Stromkreis, während sie beim Loslassen der Betätigungseinrichtung 3 selbsttätig in die geöffnete Ausgangslage zurückgeführt werden. Hierfür sind im Gehäuse 2 zwei Rückstellelemente 13; 14 in Form von Spiralfedern angeordnet.

Wie aus den Figuren 1 und 3 hervorgeht, weist das Gehäuse 2 in einem Bereich der Schnittstelle 4, hier des Kopplungselements 15, ein durscheinendes Gehäuse-Schnittstellen-Element 16 auf. Das durchscheinende Gehäuse-Schnittstellen-Element 16 ist durch eine im Gehäuse 2 angeordnete Gehäuse-Schnittstellen-Lichtquelle 17 in Form einer LED (siehe Figur 2) hinterleuchtbar, um eine Auffindbeleuchtung für das Kopplungselement 15 zu erzeugen sowie um bei einer Kopplung der Schnittstelle 4 mit einem externen elektrischen Verbraucher als optische Kopplungsbestätigung aufzuleuchten. In den gezeigten Beispielen ist das Gehäuse-Schnittstellen-Element 16 eine grafische Darstellung mit einer ovalen Form.

Wie ebenfalls aus diesen Figuren hervorgeht, weist das Gehäuse 2 in einem Bereich der Betätigungseinrichtung 3 ein durchscheinendendes Gehäuse-Betätigungseinrichtungs-Element 18 auf. Das Gehäuse-Betätigungseinrichtungs-Element 18 ist durch im Gehäuse 2 angeordnete Gehäuse-Betätigungseinrichtungs-Lichtquellen 19 in Form von LEDs hinterleuchtbar, um eine Auffindbeleuchtung für die Betätigungseinrichtung 3 zu erzeugen, und um zumindest bei einer Betätigung der Betätigungseinrichtung 3 als optische Haltewunschbestätigung aufzuleuchten.

Auch hat das Gehäuse-Betätigungseinrichtungs-Element 18 die Form einer grafischen Darstellung, und zwar eine rahmenförmige rechteckige Kontur, welche sich hier um eine Betätigungsfläche 20 der Betätigungseinrichtung 3 herum erstreckt. Das heisst, die Betätigungseinrichtung 3 weist eine Betätigungsfläche 20 auf. In den hier gezeigten Beispielen ist diese durchscheinend ausgebildet und durch eine im Gehäuse 2 angeordnete Betätigungsflächen-Lichtquelle 21 in Form einer LED hinterleuchtbar, um eine Auffindbeleuchtung für die Betätigungseinrichtung 3 zu erzeugen.

Wie in den Figuren 1 und 3 ersichtlich, ist die Schnittstelle 4, hier deren Kopplungselement 15, in einer Vertiefung 22 des Gehäuses 2 angeordnet, und eine dem Gehäuseäusseren 23 zugewandte Oberfläche 24 der Schnittstelle 4 ist gegenüber einer durch die an die Vertiefung 22 angrenzenden Gehäuseoberflächen 25 definierten Aussenkontur nach innen versetzt. Oder anders gesagt ist das Kopplungselement 15 nach innen versenkt angeordnet und ragt nicht über die Gehäuseoberflächen 25 bzw. das Gehäuseäussere 23 nach aussen hinaus.

Weiter ist eine Befestigungseinrichtung 27 zur Befestigung der Haltewunscheinrichtung 1 am bzw. im Fahrzeug, hier an der Haltestange 100 bzw. an der Fläche 200 des Fahrzeugs vorgesehen. Das Gehäuse 2 ist hier mehrteilig, insbesondere zweiteilig, ausgebildet und umfasst einen ersten Gehäuseteil 2a und einen zweiten Gehäuseteil 2b. Wie gut aus einem Vergleich der Figuren 1 und 3 hervorgeht, ist der erste Gehäuseteil 2a für die unterschiedliche Befestigungsarten (hier Haltestange vs. Fläche) gleich und der zweite Gehäuseteil 2b ist in Abhängigkeit von der Befestigungsart unterschiedlich ausgebildet.

Wie weiter aus Figur 1 hervorgeht, weist das Gehäuse 2 für eine Befestigung an der Haltestange 100 eine Aufnahme- bzw. Durchgangsöffnung 28 auf, durch welche die Haltestange 100 zumindest abschnittsweise hindurchgeführt ist.

### BEZUGSZEICHENLISTE

- 1: Haltewunscheinrichtung
- 2: Gehäuse
- 2a, 2b, ...: Gehäuseteile
- 3: Betätigungseinrichtung
- 4: Schnittstelle
- 5: elektrische Anschlusseinrichtung
- 6: elektrischer Steckverbinder
- 7: Anschlusskabel
- 8: Leiterplatte
- 9: Leiterplatte
- 10: Steckverbindung
- 11: Kontaktzunge
- 12: Kontaktzunge
- 13: Rückstellelement
- 14: Rückstellelement
- 15: Kopplungselement
- 16: Gehäuse-Schnittstellen-Element
- 17: Gehäuse-Schnittstellen-Lichtquelle
- 18: Gehäuse-Betätigungseinrichtungs-Element
- 19: Gehäuse-Betätigungseinrichtungs-Lichtquelle
- 20: Betätigungsfläche
- 21: Betätigungsflächen-Lichtquelle
- 22: Vertiefung
- 23: Gehäuseäusseres
- 24: Oberfläche der Schnittstelle
- 25: Gehäuseoberfläche
- 26a, 26b, ...: Gehäuseseiten
- 27: Befestigungseinrichtung
- 28: Aufnahme- oder Durchgangsöffnung

- 100: Haltestange

- 200: Fläche

## Patentansprüche

1. Haltewunscheinrichtung (1) für ein Fahrzeug insbesondere des öffentlichen Personenverkehrs umfassend:
- mindestens ein Gehäuse (2), das zur Befestigung an und/oder in einem Fahrzeug ausgebildet ist, und
- mindestens eine Betätigungseinrichtung (3), welche dazu ausgebildet ist, bei Betätigung insbesondere durch einen Fahrgast ein Haltewunschsignal zu erzeugen, **dadurch gekennzeichnet, dass** die Haltewunscheinrichtung (1) weiter mindestens eine Schnittstelle (4) aufweist,
wobei die Schnittstelle (4) mit einem externen elektrischen Verbraucher koppelbar und zur Übertragung elektrischer Energie an den externen elektrischen Verbraucher, insbesondere zum Aufladen des externen elektrischen Verbrauchers, ausgebildet ist.

2. Haltewunscheinrichtung (1) gemäss Anspruch 1, wobei die Schnittstelle (4) eine kontaktgebundene Energieübertragungsschnittstelle umfasst, die vorzugsweise als Steckverbindung, insbesondere als USB-Schnittstelle wie eine USB-C-Schnittstelle, ausgebildet ist.

3. Haltewunscheinrichtung (1) gemäss einem der vorhergehenden Ansprüche, wobei die Schnittstelle (4) und die Betätigungseinrichtung (3) mit mindestens einer elektrischen Energieversorgungseinrichtung des Fahrzeugs, insbesondere einer Stromversorgung des Fahrzeugs, elektrisch verbindbar sind, und
wobei die elektrische Energieversorgungseinrichtung dazu ausgebildet ist, die über die Schnittstelle (4) zu übertragende elektrische Energie bereitzustellen sowie die Erzeugung des Haltewunschsignals der Betätigungseinrichtung (3) zu ermöglichen.

4. Haltewunscheinrichtung (1) gemäss einem der vorhergehenden Ansprüche, weiter umfassend mindestens eine elektrische Anschlusseinrichtung (5), die dazu ausgebildet ist, die Haltewunscheinrichtung (1), insbesondere die Schnittstelle (4) sowie die Betätigungseinrichtung (3), mit einer elektrischen Energieversorgungseinrichtung des Fahrzeugs elektrisch zu verbinden.

5. Haltewunscheinrichtung (1) gemäss einem der vorhergehenden Ansprüche, wobei die Schnittstelle (4) und die Betätigungseinrichtung (3) innerhalb des Gehäuses (2) elektrisch miteinander verbunden sind und gemeinsam insbesondere über die elektrische Anschlusseinrichtung (5) mit einer elektrischen Energieversorgungseinrichtung des Fahrzeugs elektrisch verbindbar sind, und
wobei die Schnittstelle (4) und die Betätigungseinrichtung (3) vorzugsweise jeweils auf einer Leiterplatte (8; 9) angeordnet sind, und wobei die Leiterplatten (8; 9) insbesondere über eine innerhalb des Gehäuses (2) angeordnete elektrische Steckverbindung (10) miteinander verbunden sind.

6. Haltewunscheinrichtung (1) gemäss einem der vorhergehenden Ansprüche, wobei die Schnittstelle (4) ein Kopplungselement (15) aufweist, über welches eine Kopplung der Schnittstelle (4) mit dem externen elektrischen Verbraucher zur Übertragung elektrischer Energie herstellbar ist, und
wobei das Kopplungselement (15) am Gehäuse (2) angeordnet ist, und/oder
wobei die Betätigungseinrichtung (3) am Gehäuse (2) und insbesondere an einer dem Kopplungselement (15) abgewandten Seiten des Gehäuses (2) angeordnet ist.

7. Haltewunscheinrichtung (1) gemäss einem der vorhergehenden Ansprüche, wobei das Gehäuse (2) zumindest in einem Bereich der Schnittstelle (4), insbesondere des Kopplungselements (15), mindestens ein durscheinendes Gehäuse-Schnittstellen-Element (16) aufweist,
wobei das durchscheinende Gehäuse-Schnittstellen-Element (16) durch mindestens eine im Gehäuse (2) angeordnete Gehäuse-Schnittstellen-Lichtquelle (17), insbesondere eine LED, hinterleuchtbar ist, um:
- eine Auffindbeleuchtung für die Schnittstelle (4), insbesondere für das Kopplungselement (15), zu erzeugen, und/oder
- zumindest bei einer Kopplung der Schnittstelle (4) mit einem externen elektrischen Verbraucher als optische Kopplungsbestätigung aufzuleuchten, und/oder
- einen Fehlerzustand, insbesondere interne oder externe Störungen, eine fehlerhafte oder unsachgemässe Verwendung durch den Benutzer, und/oder eine Überschreitung der zulässigen Leistungsgrenze durch einen oder mehrere angeschlossene elektrische Verbraucher, anzuzeigen.

8. Haltewunscheinrichtung (1) gemäss einem der vorhergehenden Ansprüche, wobei das Gehäuse (2) zumindest in einem Bereich der Betätigungseinrichtung (3) mindestens ein durchscheinendendes Gehäuse-Betätigungseinrichtungs-Element (18) aufweist,
wobei das durscheinende Gehäuse-Betätigungseinrichtungs-Element (18) durch mindestens eine im Gehäuse (2) angeordnete Gehäuse-Betätigungseinrichtungs-Lichtquelle (19), insbesondere eine LED, hinterleuchtbar ist, um:
- eine Auffindbeleuchtung für die Betätigungseinrichtung (3) zu erzeugen, und/oder
- zumindest bei einer Betätigung der Betätigungseinrichtung (3) als optische Haltewunschbestätigung aufzuleuchten.

9. Haltewunscheinrichtung (1) gemäss einem der vorhergehenden Ansprüche, wobei die Betätigungseinrichtung (3) eine Betätigungsfläche (20) aufweist, welche zumindest abschnittsweise durchscheinend ausgebildet ist und durch mindestens eine im Gehäuse (2) angeordnete Betätigungsflächen-Lichtquelle (21), insbesondere eine LED, hinterleuchtbar ist, um eine Auffindbeleuchtung für die Betätigungseinrichtung zu erzeugen.

10. Haltewunscheinrichtung (1) gemäss einem der Ansprüche 7 bis 9, wobei die Gehäuse-Schnittstellen-Lichtquelle (17) und/oder die Gehäuse-Betätigungseinrichtungs-Lichtquelle (19) und/oder die Betätigungsflächen-Lichtquelle (21):
- durch eine gemeinsame Lichtquelle oder durch separate Lichtquellen bereitgestellt sind, und/oder
- gleichartige Lichtquellen oder verschiedenartige Lichtquellen, insbesondere von unterschiedlicher Wellenlänge, sind, und/oder
- für eine dauerhafte Beleuchtung oder eine periodische Beleuchtung und/oder eine ereignisabhängige Beleuchtung wie eine Kopplung der Schnittstelle (4) mit einem externen elektrischen Verbraucher und/oder einer Betätigung der Betätigungseinrichtung (3) ausgebildet sind, und/oder
- unabhängig voneinander oder in Kombination miteinander betreibbar sind.

11. Haltewunscheinrichtung (1) gemäss einem der Ansprüche 7 bis 10, wobei das Gehäuse-Schnittstellen-Element (16) und/oder das Gehäuse-Betätigungseinrichtungs-Element (18) mindestens eine grafische Darstellung und/oder mindestens ein alphanumerisches Zeichen ist.

12. Haltewunscheinrichtung (1) gemäss einem der vorhergehenden Ansprüche, wobei die Schnittstelle (4) zumindest teilweise, insbesondere deren Kopplungselement (15), in einer Vertiefung (22) des Gehäuses (2) angeordnet ist und eine dem Gehäuseäusseren (23) zugewandte Oberfläche (24) der Schnittstelle (4) gegenüber einer durch die an die Vertiefung (22) angrenzenden Gehäuseoberflächen (25) definierten Aussenkontur nach innen versetzt ist.

13. Haltewunscheinrichtung (1) gemäss einem der vorhergehenden Ansprüche, wobei das Gehäuse (2) mindestens eine Befestigungseinrichtung (27) zur Befestigung der Haltewunscheinrichtung (1) am und/oder im Fahrzeug, insbesondere an einer Haltestange (100) oder an einer Fläche (200) des Fahrzeugs, umfasst, und/oder
wobei das Gehäuse (2) mehrteilig ist und mindestens einen ersten Gehäuseteil (2a) und einen zweiten Gehäuseteil (2b) aufweist, wobei der erste Gehäuseteil (2a) für unterschiedliche Befestigungsarten gleich und der zweite Gehäuseteil (2b) in Abhängigkeit von der Befestigungsart unterschiedlich ausgebildet ist.

14. Fahrzeug, vorzugsweise des öffentlichen Personenverkehrs, umfassend mindestens eine Haltewunscheinrichtung (1) gemäss einem der vorhergehenden Ansprüche, und
wobei die Haltewunscheinrichtung (1) vorzugsweise an einer Haltestange (100) oder an einer Fläche (200) des Fahrzeugs wie einer Innenwand befestigt ist.

15. Verfahren zur Herstellung einer Haltewunscheinrichtung (1), insbesondere gemäss einem der Ansprüche 1 bis 13, umfassend die Schritte:
- Bereitstellen von mindestens einem Gehäuse (2), das zur Befestigung an und/oder in einem Fahrzeug ausgebildet ist, und
- Bereitstellen von mindestens einer Betätigungseinrichtung (3), welche dazu ausgebildet ist, bei Betätigung insbesondere durch einen Fahrgast ein Haltewunschsignal zu erzeugen,
**dadurch gekennzeichnet, dass** die Haltewunscheinrichtung (1) weiter mindestens eine Schnittstelle (4) aufweist,
wobei die Schnittstelle (4) mit einem externen elektrischen Verbraucher koppelbar und zur Übertragung elektrischer Energie an den externen elektrischen Verbraucher, insbesondere zum Aufladen des externen elektrischen Verbrauchers, ausgebildet ist.
